# EUROPEAN PATENT APPLICATION

(11) **EP 1 820 692 A1**
(43) Date of publication of application: **22.08.2007**
(21) Application number: 07250671.0
(22) Date of filing: 16.02.2007
(51) Int. Cl.: B60P 3/16, B28C 5/42

(54) **A vehicle having a drum**

(30) Priority: 16.02.2006 GB 0603088
(71) Applicant: Hymix Limited, Stafford Park 11 Telford, Shropshire, TF3 3BD (GB)
(72) Inventor: Humpish, Nick, Shropshire, TF8 7HU (GB)
(74) Representative: Gosnall, Toby

(57) **Abstract**

A vehicle (100) having a drum (106) arranged to rotate and a drum drive means arranged (108) to rotate the drum (106), the vehicle further comprising a monitoring system (118) comprising processing circuitry (110) and sensor means (112) arranged to generate an input signal and input said signal to the processing circuitry (110), the processing circuitry (110) being arranged to generate an imbalance output signal and to control the drum drive means and thereby control rotation of the drum according to the imbalance output signal.

## Description

This invention relates to a vehicle having a drum and to methods of monitoring such a vehicle and in particular a concrete mixing vehicle. Other embodiments particularly aimed at improving the stability of a concrete mixing vehicle are also described.

Various means of monitoring concrete mixing vehicles are known. For example in GB0220246.3 a monitoring system is disclosed in which a memory means and a processing means are provided on a concrete mixing vehicle and in which data is input to the processing means from the concrete mixing vehicle and properties of the mix are determined by the processing means and stored in the memory means known system monitor the concrete mix and may also monitor the vehicle condition such as fuel consumption, tyre pressure, acceleration and deceleration.

A particular problem of concrete mixing vehicles is that concrete mixture may adhere to sides of the drum and travel upwards and outwards relative to the drum bed. This may cause a lateral instability of the concrete mixing vehicle as a whole.

According to a first aspect of the invention there is provided a vehicle having a drum arranged to rotate and a drum drive means arranged to rotate the drum and the vehicle further comprising a monitoring system comprising processing circuitry and a sensor means arranged to sense an imbalance of the drum, generate an imbalance signal and input said imbalance signal to the processing circuitry, the processing circuitry being arranged to control the drum drive means and thereby control rotation of the drum according to the imbalance signal.

In a preferred form an inclination of the drum is measured. The imbalance signal may provide an inclination signal.

An advantage of such an arrangement is that the inclination of the drum is monitored and controlled according to the inclination of the drum which can help to make the vehicle safer.

Generally, the vehicle will be a concrete mixing vehicle. However, it may be any other kind of vehicle.

In one embodiment the tilt sensor is arranged to detect lateral tilt of the vehicle. Such embodiments are desirable because it will be appreciated that if the lateral tilt of the vehicle is too great then the vehicle may fall over. This may happen for instance on uneven or sloping ground. This can be a problem in concrete mixing vehicles in which the centre of gravity of the vehicle can be raised by movement of concrete with the drum as it rotates.

In one embodiment, the monitoring system is arranged to stop rotation of the drum if the angle of lateral inclination of the vehicle exceeds a first angle. Such an arrangement is advantageous because preventing further rotation of the drum may prevent further tilt of the vehicle. This may stabilise the vehicle and allow concrete within the drum settle within the drum and possibly reduce the lateral tilt.

In one embodiment the sensor means is arranged to sense the inclination substantially continuously. However, other embodiments may sense the inclination periodically - for example the sensor means may be arranged to sense the inclination roughly at any of the following times: 1 second, 2 second, 3 seconds, 4 seconds, 5 seconds, 10 seconds or 30 seconds or at any time in between any of these times.

The processing circuitry may be arranged to reverse rotation of the drum should the inclination of the drum exceed a predetermined limit. The predetermined limit may the first angle or may be a second angle.

Generally, the second angle will be greater than the first angle but this need not be the case. For example, the monitoring system of some embodiments may be arranged to reverse rotation of the drum at the first angle and not simply stop the drum. Reversing rotation of the drum is advantageous since this will tend to return concrete mixture within the drum to a position that does not compromise the lateral stability of the concrete mixing vehicle (i.e. the centre of gravity of the vehicle may be lowered).

In a further, alternative, or additional, embodiment the sensor means is arranged to monitor the inclination of the drum in a fore to aft direction. The tilt in a fore to aft direction is affected at least by an incline of a roadway on which the concrete mixing vehicle is located. A problem associated with concrete mixing vehicles is that on a steep hill a wet mix may slop out of the drum onto the roadway causing a hazard to other users of the roadway and being a particular danger to vehicles travelling close behind a concrete mixing vehicle.

Generally, the drums of concrete mixing vehicles contain an Archimedes screw which is fixed to the drum and which rotates with the drum. Thus, in such a drum, rotation of the drum will tend to cause material within the drum to move lengthways relative to the drum.

The processing circuitry may be arranged to control the drum drive means according to the angle of the vehicle in a fore to aft direction as determined by the inclination signal. An increase in rotational speed of the drum and therefore of the Archimedes screw results in concrete mixture to being retained within the drum so improving safety for other road users.

In one embodiment the sensor means is arranged to monitor both lateral inclination and fore to aft inclination of the concrete mixing vehicle and to output both inclinations to the processing circuitry.

According to a second aspect of the invention there is provided a method of controlling the rotation of a drum of a vehicle having a drum comprising generating an imbalance signal indicative of an imbalance of the drum and controlling rotation of the drum according to the imbalance signal.

Preferably an inclination of the drum is measured.

The method may comprise stopping rotation of the drum should its lateral inclination exceed a predetermined limit.

Alternatively, or additionally, the method may reverse rotation of the drum if lateral inclination exceeds a predetermined limit.

Further, the method may be arranged to vary the speed of rotation of the drum according to angle of inclination of the drum in a fore / aft direction. Such a method is advantages because it can help to stop spillage of the contents of the drum as described in relation to the first aspect of the invention.

According to a third aspect of the invention there is provided a method of improving the safety of a concrete mixing vehicle having a drum and an operating system controlling operation of the drum comprising generating an imbalance signal indicative of an imbalance of the drum in a fore to aft direction and controlling the speed of rotation of the drum according to a degree of imbalance.

Preferably an inclination signal is generated.

The method may comprise comparing the inclination signal to at least a first critical angle and if said first critical is exceeded increasing the speed of rotation of the drum. Such a method is advantageous because it can help to draw material back into the drum, as the skilled person will appreciate the drums of concrete mixing vehicles tend to have an Archimedes screw therein which acts on material within the drum to tend to move the material in a longitudinal direction relative to the drum.

According to a fourth aspect of the invention there is provided a monitoring system suitable for fitting to a concrete mixing vehicle comprising processing circuitry and a sensor means arranged to sense, in use, a degree imbalance of a portion of the concrete mixing vehicle and to input the degree of imbalance to the processing circuitry, the processing circuitry being arranged to compare the degree of imbalance to a first critical degree and being arranged to output an output signal indicative of the degree of imbalance if the first critical degree is exceeded.

Preferably there is provided according to a fifth aspect of the invention a monitoring system suitable for fitting to a concrete mixing vehicle comprising processing circuitry and a sensor means arranged to sense, in use, an angle of inclination of a portion of the concrete mixing vehicle and to input the inclination angle to the processing circuitry, the processing circuitry being arranged to compare the angle of inclination to a first critical angle and being arranged to output an output signal indicative of the angle of inclination if the first critical angle is exceeded.

Preferably the system is arranged such the output signal can be used to control the speed of rotation of a drum of a concrete mixing vehicle.

An embodiment of the invention is now described by way of example only with reference to the accompanying drawings of which:
**Figure 1.** shows a representation of a concrete mixing vehicle arranged to operate according to the embodiment of the present invention described herein, and
**Figure 2.** shows a mobile computing system arranged to provide the method of the embodiment of the present invention described herein.

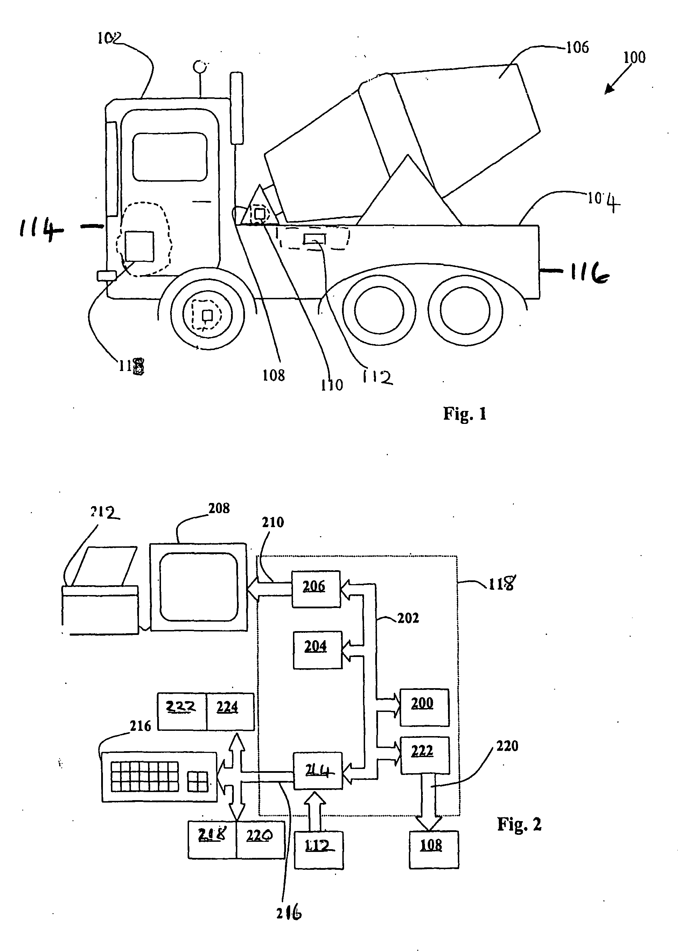

The concrete mixing vehicle 100 shown in Figure 1 comprises a cab 102 and a drum bed 104 on which is mounted a rotatable drum 106 providing a mixing vessel driven by a motor 108. Linked to the motor 108 (i.e. a drum drive means) is a controller 110 arranged to control among other things the speed at which the drum rotates and the direction of the rotation of the drum.

A tilt sensor 112, which provides a sensor means, is located on the drum bed 104. The tilt sensor is arranged to generate an inclination signal indicative of the inclination of the senor and thereby of the inclination to the apparatus to which the sensor is attached. There are many forms of tilt sensor which would be suitable for embodiments of the invention. For example gyroscopes, liquid / capacitive based sensors, inclinometers, load sensors or linear transducers or any other sensors may be suitable.

The location of the tilt sensor may be varied but should be able to sense an angle of inclination of the vehicle. Generally, the angle of inclination is measured relative to a reference plane which is conveniently relative to a substantially horizontal plane. The tilt sensor may be arranged to measure the angle of inclination of the drum / drum bed in a lateral direction, i.e. from one side of the concrete mixing vehicle to the other.

Alternatively, or additionally, the tilt sensor may be arranged to measure the angle of inclination of the drum bed 104 / drum in a fore to aft direction i.e. between a front 114 and a rear 116 of the concrete mixing vehicle. Preferably the sensor is arranged to measure an inclination in both lateral and for to aft directions. Within the cab 102 there is a monitoring system 118 shown in more detail in Figure 2 and described below.

The monitoring system 118 comprises a mobile computing device containing a processing circuitry which in this embodiment is provided by a processor 200 connected via a bus 202 to a memory means 204. The bus 202 also connects the processor 200 to a display driver 206 which drives a display 208 connected to an output interface 210. Also connected to the output interface 210 is a printer 212. An input/output controller 214 is also connected to the bus 202 and to a keyboard 216. The keyboard 216 (an input means allows a user to make inputs to the monitoring system 118) .

The processor may be any suitable processor but processor such as an Intel™ Pentium™, or an AMD™ Athlon™ or the like may be suitable. In other embodiments the processing circuitry may be provided by any other suitable means such as analogue circuitry, a programmable controller, an Application Specific Integrated Circuit (ASIC).

The input/output controller 214 also receives inputs from the tilt sensor 112 (i.e. the inclination signal) which provides information about the angle of inclination of the concrete mixing vehicle relative to horizontal.

Advantageously the tilt sensor measures the tilt of the drum bed / drum. The input/output controller 214 may also receive other inputs from a connection 216 as described in GB02202246.3, such as from weight acquiring means 21, temperature generating means 220, time generating means 222 and from a vehicle log 224. The skilled man will realise that this list is exemplary not exhaustive.

The tilt sensor 112 (sensing means) may comprise a conventional tilt sensing and measuring means arranged to transmit an angle of inclination relative to horizontal to the monitoring system.

In use a concrete mixing vehicle is loaded with the components of a concrete mix. The components may form a mix that adheres to the sides of the drum 106 as it revolves. If this occurs a mass of concrete moves upwardly and outwardly from the centre of gravity of the concrete mixing vehicle.

As the mass of concrete moves outwardly it can cause the drum bed / vehicle to assume a tilt relative to horizontal. A small degree of tilt is acceptable and within a range of movement accepted as normal. However, an excessive tilt can destabilise the concrete mixing vehicle and cause it to be in danger of toppling over. This is especially the case when the vehicle is on ground which is sloping.

In one embodiment of the invention the tilt sensor measures a lateral angle of inclination to the input/output controller 214.

In the embodiment being described the processor 200 compares the angle of inclination to a stored first critical angle, and a stored second critical angle. If the angle of inclination is greater than the first critical angle but smaller than the second critical angle the processor sends a first output message to the controller 110.

On receipt of the first output message the controller 110 operates the motor 108 to stop the drum 106 revolving. Once the drum stops revolving the concrete mix can settle towards a lower portion of the drum, causing the turning movement exerted by the mass of concreted mix to reduce as concrete mix slides down the inside of the drum thereby lowering the centre of gravity of the vehicle.

If the angle of inclination is greater than the first and second stored critical angles the processor sends a second output message to the controller 110.

On receipt of the second output message the controller 110 operates the motor 108 to reverse the direction of rotation of the drum 106. Thus causes the mass of concrete to be returned, more rapidly when compared to simply stopping rotation of the drum, to the centre of the concrete mixing vehicle thereby lowering and moving the centre of gravity toward the centre region of the vehicle. Thus the likelihood of any instability of the concrete mixing vehicle as a whole, and likelihood of tipping of the vehicle is reduced.

If the angle of inclination is less than the first critical angle the processor may send no output message to the controller 110.

The same sensor 112 may also be arranged to measure a second angle of inclination to horizontal in a fore front 114 to aft rear 116 directions.

Alternatively, or additionally, a second sensor may be used. Using two sensors may provide resilience thereby increasing the security of the monitoring system.

The sensor 112 outputs the second angle of inclination to the processor 200 via the input/output controller 214.

In the embodiment being described the processor 200 compares the second angle of inclination with a stored third critical angle (inclination of the fore/aft axis as opposed to lateral inclination). In the event that the second angle of inclination is less than the third critical angle no output to the controller 112 is sent but in the event that it is greater than the third critical angle a third output message is sent to the controller.

On receipt of the third output message the controller acts to increase the speed of rotation of the drum 106. The action of this and the Archimedes screw (not shown) within the drum is such as to retain concrete mixture within the drum.

The processor and controller may be arranged to vary the rotational speed of the drum stepwise or incrementally depending on the degree of the second angle of inclination.

In other embodiments, the processor and the controller may control the speed of the drum according to the inclination signal irrespective of whether the third angle has been exceeded.

In an alternative, or additional, embodiment the sensor means is arranged to measure a load on at least one location of the concrete mixing vehicle.

A load may be measured at at least two locations of the concrete mixing vehicle. It is preferred to measure the load at the or each location at intervals or continuously. The sensor means generates an output signal, indicative of the load measured, to the processing means. The processing means may compare on output from a first location to the output from a second location to generate a degree of imbalance signal.

Alternatively the processing means may compare a first signal from a location at a first time to a second signal from the location at a second time to generate a degree of imbalance signal should the second signal differ from the first by more than a predetermined degree.

The sensor means may be load sensor means on the braking system. In some embodiments, load sensors may be provided in association with each wheel of the braking system. The system may be arranged such that the load on each wheel of the vehicle, as determined from the load sensor, may be utilised to determine the inclination of the vehicle.

In some embodiments, the sensor means may be arranged between a chassis and an axle of the vehicle. A suitable sensor would be a linear transducer. In such an embodiment the system may be arranged to use the output from the sensor means to determine whether the vehicle is tilting and may allow the system to determine whether the chassis is twisting.

## Claims

**1.** A vehicle having a drum arranged to rotate and a drum drive means arranged to rotate the drum, the vehicle further comprising a monitoring system comprising processing circuitry and sensor means, arranged to generate an input signal and input said signal to the processing circuitry, the processing circuitry being arranged to generate an imbalance output signal and to control the drum drive means and thereby control rotation of the drum according to the imbalance output signal.

**2.** A vehicle according to claim 1 wherein the sensor means is arranged to sense an inclination of the vehicle and is arranged such that the imbalance signal comprises an input inclination wherein the inclination signal is input to the processing circuitry, the processing circuitry being arranged to control the drum drive means and thereby control rotation of the drum according to the inclination signal.

**3.** A vehicle according to claim 1 wherein the sensor means is arranged to sense the inclination continuously or substantially continuously.

**4.** A vehicle according to claim 1 wherein the sensor means is arranged to sense the inclination from time to time, and a period between sensings is one of 1 second, 2 seconds, 3 seconds, 4 seconds, 5 seconds, 10 seconds or 30 seconds.

**5.** A vehicle according to claim any preceding claim wherein the sensor means is arranged to sense a lateral inclination of the vehicle and the monitoring system is arranged to stop rotation of the drum if an angle of lateral inclination of the vehicle exceeds a first angle.

**6.** A vehicle according to claim 5 wherein the monitoring system is arranged to reverse rotation of the drum should the angle of inclination exceed a predetermined limit.

**7.** A vehicle according to claim 6 wherein the predetermined limit is one of the first angle and a second angle.

**8.** A vehicle according to claim 8 wherein the second angle is greater than the first angle.

**9.** A vehicle according to any one of claims 1 to 4 wherein the sensor means is arranged to monitor the inclination of the vehicle in a fore to aft direction.

**10.** A vehicle according to claim 9 wherein the drum comprises an Archimedes screw fixed to the drum and which rotates therewith and wherein the monitoring system is arranged to increase a rotational speed of the drum drive means in response to an increase in the angle of inclination.

**11.** A vehicle according to any preceding claim wherein the sensor means is arranged to monitor both lateral and fore to aft inclination of the vehicle and to output both inclinations to the processing circuitry of the monitoring system.

**12.** A method of controlling rotation of a drum of a vehicle having a drum, the method comprising generating an imbalance signal indicative of a degree of imbalance of the vehicle and controlling rotation of the drum according to the imbalance signal.

**13.** A method of controlling rotation of a vehicle according to claim 12 comprising stopping rotation of the drum if the inclination signal exceeds a first predetermined angle and reversing rotation of the drum if the inclination signal exceeds a second predetermined angle.

**14.** A method of controlling rotation of a drum according to claim 12 wherein the monitoring means is arranged to vary the speed of rotation of the drum according to an angle of inclination of the drum.

**15.** A method of controlling rotation of a drum according to claim 12 wherein the sensor means comprises at least one load sensor and the imbalance output is indicative of an imbalance in a load of the concrete mixing vehicle.

**17.** A method of improving the safety of a concrete mixing vehicle having a drum and an operating system controlling operation of the drum, the method comprising generating an imbalance signal indicative of an imbalance of the vehicle in a fore to aft direction and controlling rotation of the drum according to the imbalance signal.

**18.** A monitoring system suitable for fitting to a concrete mixing vehicle comprising processing circuitry and a sensor means arranged to sense, in use, a degree of imbalance of a portion of the concrete mixing vehicle and to input the degree of imbalance to the processing circuitry, the processing circuitry being arranged to output an output signal indicative of the degree of imbalance.

**19.** A monitoring system according to claim 18 wherein the output signal can be used to control rotation of a drum of a concrete mixing vehicle.
